# EUROPÄISCHE PATENTSCHRIFT

(11) **EP 0 407 343 B1**
(45) Veröffentlichungstag und Bekanntmachung des Hinweises auf die Patenterteilung: **11.06.1997**
(21) Anmeldenummer: 90810485.4
(22) Anmeldetag: 28.06.1990
(51) Int. Cl.: A01N 57/16

(54) **Verfahren zur Bekämpfung der Fischlaus**
Method for controlling sea lice
Procédé pour combattre les poux de mer

(30) Priorität: 07.07.1989 CH 2530/89
(43) Veröffentlichungstag der Anmeldung: 09.01.1991
(73) Patentinhaber: Novartis AG, 4058 Basel (CH)
(72) Erfinder: Dobson, Philip, Over, Cambridge (GB); Somerville, James Miller, CH-4117 Burg (CH); Schuurman, Hessel Johannes, Dr., CH-4125 Riehen (CH)

(56) Entgegenhaltungen:
- DE-A- 2 131 734
- WPI, File Supplier, AN=67-05315G, Derwent Publ. Ltd., London, GB
- WPI, File Supplier, AN=81-59658D, Derwent Publ. Ltd., London, GB

## Beschreibung

Die vorliegende Erfindung betrifft die Verwendung des Wirkstoffes S-6-Chlor-2,3-dihydro-2-oxo-1,3-oxazolo-[4,5-b]-pyridin-3-ylmethyl 0,0-dimethylphosphorthioat mit dem Common Name Azamethiphos zur Herstellung eines Präparates zur Bekämpfung von Fischläusen, die auf Fischen der Familie Salmonidae parasitieren.

Der Einfachheit halber wird im folgenden statt der chemischen Bezeichnung der Common Name Azamethiphos als Bezeichnung für den Wirkstoff verwendet.

Zu den beliebtesten Speisefischen zählen seit einigen Jahren beim Konsumenten Lachse und Forellen wegen ihres feinen Geschmacks und der geringen Grätenzahl. Die Nachfrage ist so angestiegen, dass der traditionelle Fischfang in offenen Gewässern sie längst nicht mehr befriedigen kann. In den letzten Jahren sind daher Fischfarmen, vor allem in den Nordeuropäischen Ländern, entstanden, die sich die künstliche Aufzucht dieser Speisefische zur Aufgabe gemacht haben.

Im übrigen umfasst der Begriff "Lachs" im Rahmen der vorliegenden Erfindung alle Vertreter der Familie der Salmonidae, insbesondere die der Unterfamilie Salmonini und vorzugsweise folgende Spezies: Salmon salar (Atlantiklachs); Salmon trutta (braune oder Meeresforelle); Salmon gairdneri (Regenbogenforelle); sowie die Pazifik-Lachse (Oncorhynchus): O. gorbuscha; O. keta; O. nekra; O. kisutch; O. tshawytscha und O. mason; umfasst werden aber auch züchterisch veränderte Arten, wie z.B. Salvelinus Spezies und Salmo clarkii.

Bevorzugte Zielobjekte der vorliegenden Erfindung sind die Atlantik- und Pazifik-Lachse und die Meerwasserforellen.

Bei der modernen Lachs- und Forellenzucht werden Jungfische im Smolt-Stadium vom Süsswasserbecken in Meereswasserkäfige (Salzwasser) übergeführt. Dabei handelt es sich um kubische, quaderförmige oder auch runde Käfige aus einem Metallgrundgerüst, das von einem relativ feinmaschigen Netz umgeben ist. Diese Käfige werden zu etwa 9/10 ins Meer versenkt, und so verankert, dass sie von oben her zugänglich sind.

In einer anderen Variante werden die Fische in Meerwasserbassins bzw. -tanks unterschiedlicher Form gehalten. Die Käfige werden in Meeresbuchten derart angeordnet, dass sie ständig so durchströmt werden, dass eine ausreichende Sauerstoffversorgung gewährleistet ist. Auch das Salzwasser in den Meerwassertanks wird unter Sauerstoffzufuhr in Strömung gehalten. In dieser künstlichen Umgebung werden die Fische gefüttert und notgedrungenermassen auch medikamentös behandelt bis sie soweit heranreifen, dass sie als Speisefische in den Handel gebracht werden können oder für die Weiterzucht aussortiert werden.

In diesen Fischzuchtanlagen wird äusserst intensive Käfighaltung betrieben. Die Fischdichte erreicht Grössenordnungen von 10 bis 25 kg Fisch/m³. Bei dieser reinen Monokultur, den ausserordentlich hohen Fischkonzentrationen, zusammen mit den übrigen Stressfaktoren, erweisen sich die gefangenen Fische im allgemeinen als deutlich anfälliger gegen Krankheiten, Seuchen und Parasiten als ihre freilebenden Artgenossen. Um dennoch gesunde Populationen zu erhalten, müssen die gefangenen Fische regelmässig medikamentös behandelt und permanent überwacht werden.

Neben Infektionskrankheiten, steht bei der kommerziellen Lachszucht aber vor allem der Parasitenbefall als Schadfaktor im Vordergrund, wobei hier insbesondere zwei Vertreter der Klasse der Crustaceae (Krebstiere) zu erheblichen Ertragsverlusten führen. Diese Parasiten werden volkstümlich als Fischläuse (sea lice) bezeichnet. Die eine Art ist Lepeophtheirus, L. salmonis, die andere Caligus, C. elongatus. Sie sind leicht zu erkennen. Erstere hat einen braunen, hufeisenförmigen Rückenschild; letztere ist auch braun, aber wesentlich kleiner. Diese Fischläuse schädigen den Fisch durch Frass an den Schuppen, dem Zellgewebe und den Schleimhäuten. Bei starkem Befall schädigen diese Parasiten auch tiefer gelegene Gewebeschichten. Wenn befallene Lachse darüberhinaus noch in kühleren Gewässern gehalten werden, dann sind sie meistens nicht mehr in der Lage, sich gegen diese Schädlinge zu wehren. Es kommt in der Folge zu Sekundärinfektionen und zu übermässigen Wasseransammlungen im Gewebe, selbst wenn es gelingt die Fischläuse zu entfernen. Im Extremfall führt dieser Parasitenbefall bei grösseren Verwundungen zu weiteren Gewebeschäden durch ultraviolette Strahlung (McArdle & Bullock, Journal of Fish Diseases, 255-264, 1987) oder durch osmotischen Schock bzw. durch die Sekundärinfektionen zum Tod der Fische (Saward et al., Summary of marine toxicity tests...., DAFS Marine Lab Aberdeen, 1982; Tully, O., Shellfish Res. Lab., Carna, S. Ireland, Lab Report Series B0062, 2-12, 1988).

Die Fischlaus ist mittlerweile weit verbreitet und in allen Fischfarmen anzutreffen. Starker Parasitenbefall tötet die Fische. Sterberaten, basierend auf dem Fischlausbefall, von über 50 % werden aus Norwegischen Fischfarmen berichtet (Needham, 1978, zitiert in Saward et al., 1982). Das Ausmass der Schäden hängt von der Jahreszeit und von Umweltfaktoren, wie z.B. Salzgehalt des Wassers (Rae, g., Fish Farmer 2, 22-23, 1979) und mittlerer Wassertemperatur (Tully, O., J. of Marine Biological Association, 69, 279-288, 1989) ab. In einer ersten Phase erkennt man den Fischlausbefall an den am Fisch haftenden Parasiten, später - noch deutlicher - an den Schäden der Haut und des Gewebes. Die stärksten Schäden beobachtet man bei Junglachsen (smolts), die sich gerade in dem Lebensabschnitt befinden, in dem sie vom Süsswasser zum Salzwaser überwechseln. Verschlimmert wird das Ganze auch noch durch die spezifischen Zustände in den Fischzuchtfarmen, wo oft Lachse unterschiedlicher Jahrgange, aber gleicher Gewichtsklasse, gemischt gehalten werden; verschmutzte Netze oder Käfige benutzt werden; hohe Salzkonzentrationen vorzufinden sind; geringe Durchströmung der Netze bzw. Käfige erfolgt und die Fische auf sehr kleinem Raum gehalten werden.

Fischzüchter, die mit diesem Parasitenproblem konfrontiert sind, haben erhebliche finanzielle Einbussen und Mehrkosten hinzunehmen. Zum einen sind ihre Fische geschwächt und durch die Läuse geschädigt, was zu geringeren Gewichtszuwachsraten führt; zum anderen müssen Sekundärinfektionen mit teuren Medikamenten und arbeitsintensiven Massnahmen unterdrückt werden. In vielen Fällen kann die Ware nicht mehr verkauft werden, da die geschädigten Fische auf Ablehnung beim Konsumenten stossen. Für Lachszüchter kann dieser Lausbefall zu einem existenzbedrohenden Problem werden.

Den grössten Schaden richtet dabei Lepeoptheirus an, da bereits wenige Parasiten grossflächige Gewebeschäden verursachen. Der Lebenszyklus von Lepeoptheirus besteht im wesentlichen aus zwei im Wasser freilebenden Larvenstadien (Naupilus- und Copepodien-Stadien), vier Chalimus-Stadien einem preadulten und dem eigentlichen Adultenstadium. (Institute of Aquaculture, 1988, The reduction of the impact of fish farming on the natural marine environment - A report of the Nature Conservancy Council UK). Die Chalimus-, Preadulten- und Adulten-Stadien sind wirtsabhängig.

Am gefährlichsten, da sie den grössten Schaden anrichten, sind alle auf dem Fisch parasitierende Fischlausstadien, vor allem die eigentlichen adulten Stadien.

Es sind bereits Präparate im Handel, die gegen Fischläuse eingesetzt werden können, so z.B. Trichlorfon (Dimethyl-2,2,2-trichlor-1-hydroxyethylphosphonat), das Salzwasser-Konzentrationen von 300 ppm erfordert und Dichlorvos (2,2-Dichlorethenyl-dimethyl-phosphat), das ab 1 ppm wirkt. Nachteilig an diesen Präparaten sind allerdings die hohen Aufwandmengen und die damit verbundene Umweltbelastung, die auch durch die relativ hohen Halbwertzeiten noch mehr zum Tragen kommt.

Ueberraschend wurde nunmehr mit Azamethiphos (S-6-Chlor-2,3-dihydro-2-oxo-1,3-oxazolo-[4,5-b]-pyridin-3-ylmethyl 0,0-dimethyl-phosphorthioat) - einem Vertreter aus einer völlig anderen Stoffklasse - eine Substanz gefunden, die, bei sehr geringer Fischtoxizität, eine noch bessere Wirkung und vor allem eine etwa um den Faktor 3 raschere photolytische und hydrolytische Abbaubarkeit gegenüber den bekannten Fischlaus-Präparaten aufweist und überdies gegen alle auf dem Fisch parasitierenden preadulten und adulten Stadien der Fischlaus erfolgreich eingesetzt werden kann.

So erreicht man beispielsweise mit Azamethiphos in Meerwasser mit einem Salzgehalt von 2,3-3,3 % im direkten Vergleich mit den oben genannten Produkten bei der niedrigen Konzentration von 0,1 ppm noch volle Wirkung (100%ige Kontrolle), d.h. mit 10 mal weniger als Dichlorvos und 3000 mal weniger als Trichlorfon. Darüberhinaus zeigt der in vitro - Versuch bei Temperaturen von 4 bis 15°C, dass Azamethiphos 100%ige Wirkung bei einer Konzentration von 0,1 ppm bereits innerhalb von 1 Stunde bewirkt, wohingegen man das 20-fache an Dichlorvos und das mehr als 1000-fache an Trichlorfon einsetzen muss. Ferner zeigt Azamethiphos eine deutlich bessere Aktivität gegen die sehr resistenten Chalimus-Stadien, wodurch die Zahl Applikationen reduziert werden kann.

Eine weitere vorteilhafte Eigenschaft von Azamethiphos besteht darin, dass bei den vorgeschlagenen Konzentrationen andere Meeresbewohner, wie Hummer, Austern, Krebse (mit Ausnahme der Fischlaus), Fische und die Meerespflanzen nicht geschädigt werden. Seine Abbauprodukte sind für Meeresfauna und -flora ohnehin unschädlich.

Azamethiphos, dessen Herstellung und dessen Wirkung gegen Vertreter der Insekten und Gliederfüssler sind in der Deutschen Offenlegungsschrift Nr. 2,131,734 beschrieben. Es gibt aber keinerlei Hinweise in wissenschaftlicher oder Patent- Literatur darüber, dass Azamethiphos auch gegen Vertreter der Klasse der Crustaceae (Krebsttiere) eine hervorragende Wirkung besitzen könnte.

Im Vergleich zu anderen phosphororganischen Insektiziden ist Azamethiphos sehr gut wasserlöslich und kann daher unverdünnt eingesetzt werden. Besser handhabbar sind jedoch Präparate, in denen der Wirkstoff in verdünnter Form vorliegt. Als Verdünnungsmittel kommen für Fische und andere Meerestiere und -pflanzen untoxische Substanzen, die flüssig oder auch fest sein können, und unmittelbar vor der erfindungsgemässen Verwendung auch Wasser in Frage.

Verkaufsfertige Packungen sind zur leichteren Anwendbarkeit bereits so dimensioniert, dass sie in bestimmten Wasservolumina unverdünnt eingesetzt werden können. Dabei resultieren aus der durchschnittlichen Käfiggrösse, die Richtwerte für diese Dimensionierung, so können beispielsweise Packungen bereitgestellt werden, für die Anwendung in 10 m³, 50 m³, 100 m³, 500 m³ oder 1000 m³ Wasser. Für die Anwendung in einem Käfig mit 520 m³ könnte man entsprechende Packungseinheiten kombinieren, z.B. (1x500) und (2x10).

Für den prakitschen Einsatz sind auch Folien geeignet, die den Wirkstoff in einer leicht wasserlöslichen Matrix enthalten.

Einheitspackungen enthalten im allgemeinen Azamethiphos unverdünnt oder zusammen mit untoxischen Verdünnungsmitteln gebrauchsfertig zur Anwendung in definierten Wasservolumina. Die Packungen sind so dimensioniert, dass man Wirkstoffkonzentrationen von 0,005 bis 2 ppm, vorteilhafterweise 0,01 bis 1 ppm, bevorzugt 0,05 bis 0,5 ppm erreicht, wenn man sie in ein vorgegebenes Wasservolumen einbringt.

Vorteilhafte Aufwandmengen liegen bei 0,005 bis 2g AS/m³, bevorzugt bei 0,01 bis 1g AS/m³, insbesondere bei 0,05 bis 0,5 g AS/m³ (AS = AS Aktivsubstanz).

Die erfindungsgemässen verdünnten Mittel werden hergestellt, indem der Wirkstoff mit flüssigen und/oder festen Formulierungshilfsstoffen durch schrittweises Vermischen und/oder Vermahlen derart in Kontakt gebracht werden, sodass eine anwendungskonforme optimale Entfaltung der antiparasitären Aktivität der Formulierung erzielt wird.

Die Formulierungsschritte können durch Kneten, Granulieren (Granulate) und gegebenenfalls Pressen (Pellets, Tabletten) ergänzt werden.

Als Formulierungshilfsstoffe dienen beispielsweise für die Meeresflora und -fauna untoxische feste Trägerstoffe, Lösungsmittel und gegebenenfalls oberflächenaktive Stoffe (Tenside).

Zur Bereitung der erfindungsgemässen Mittel werden folgende Formulierungshilfsstoffe verwendet:

Feste Trägerstoffe wie z.B. Kaolin, Talkum, Bentonit, Kochsalz, Calciumphosphat, Kohlenhydrate, Cellulosepulver, Baumwollsaatmehl, Polyäthylenglykoläther, gegebenenfalls Bindemittel wie z.B. Gelatine, lösliche Cellulosederivate, gewünschtenfalls unter Zusatz von oberflächenaktiven Stoffen wie ionischen oder nicht-ionischen Dispersionsmitteln; ferner natürliche Gesteinsmehle wie Calcit, Montmorillonit oder Attapulgit. Zur Verbesserung der physikalischen Eigenschaften können auch hochdisperse Kieselsäure oder hochdisperse saugfähige Polymerisate zugesetzt werden. Als gekörnte, adsorptive Granulatträger kommen poröse Typen, wie z.B. Bimsstein, Ziegelbruch, Sepiolit oder Bentonit, als nicht sorptive Trägermaterialien z.B. Calcit oder Sand in Frage. Darüber hinaus kann eine Vielzahl von vorgranulierten Materialien anorganischer oder organischer Natur wie insbesondere Dolomit oder zerkleinertes Pflanzenmaterial verwendet werden.

Als Lösungsmittel kommen in Frage: Aromatische Kohlenwasserstoffe, bevorzugt die Fraktionen C₈ bis C₁₂, wie z.B. Xylolgemische oder substituierte Naphthaline, Phthalsäureester wie Dibutyl- oder Dioctylphthalat; aliphatische Kohlenwasserstoffe wie z.B. Cyclohexan oder Paraffine, Alkohole und Glykole sowie deren Ether und Ester, wie z.B. Ethanol, Ethylenglykol, Ethylenglykolmonomethyl- oder Ethylether, Ketone wie z.B. Cyclohexanon, stark polare Lösungsmittel wie z.B. N-Methyl-2-pyrrolidon, Dimethylsulfoxid oder Dimethylformamid, sowie gegebenenfalls epoxydierte Pflanzenöle wie z.B. epoxydiertes Kokosnussöl oder Sojaöl und Wasser.

Als oberflächenaktive Verbindungen kommen je nach Art der Formulierung nicht-ionogene, kation- und/oder anionaktive Tenside mit guten Emulgier-, Dispergier- und Netzeigenschaften in Betracht. Unter Tensiden sind auch Tensidgemische zu verstehen.

Geeignete anionische Tenside können sowohl sog. wasserlösliche Seifen, als auch wasserlösliche synthetische oberflächenaktive Verbindungen sein.

Als Seifen seien die Alkali-, Erdalkali- oder gegebenenfalls substituierten Ammoniumsalze von höheren Fettsäuren (C₁₀-C₂₂), wie z.B. die Na- oder K-Salze der Oel- oder Stearinsäure, oder von natürlichen Fettsäuregemischen, die z.B. aus Kokosnuss- oder Talgöl gewonnen werden können.

Häufig werden sog. synthetische Tenside verwendet, insbesondere Fettsulfonate, Fettsulfate, sulfonierte Benzimidazolderivate oder Alkylsulfonate.

Die Fettsulfonate oder -sulfate liegen in der Regel als Alkali-, Erdalkali- oder gegebenenfalls substituierte Ammoniumsalze vor und weisen einen Alkylrest mit 8 bis 22 C-Atomen auf, wobei Alkyl auch den Alkylteil von Acylresten einschliesst, z.B. das Na- oder Ca-Salz der Ligninsulfonsäure, des Dodecylschwefelsäureesters oder eines aus natürlichen Fettsäuren hergestellten Fettalkoholsulfatgemisches. Hierher gehören auch die Salze der Schwefelsäureester und Sulfonsäuren von Fettalkohol-Ethylenoxid-Addukten. Die sulfonierten Benzimidazolderivate enthalten vorzugsweise 2 Sulfonsäuregruppen und einen Fettsäurerest mit 8-22 C-Atomen. Alkylarylsulfonate sind z.B. die Na-, Ca- oder Triethanolaminsalze der Dodecylbenzolsulfonsäure, der Dibutylnaphthalinsulfonsäure oder eines Naphthalinsulfonsäure-Formaldehydkondensationsproduktes.

Ferner können auch entsprechende Phosphate, wie z.B. Salze des Phosphorsäureesters eines p-Nonylphenol-(4-14)-Ethylenoxyd-Adduktes oder Phospholipide, als Formulierungshilfsstoffe Anwendung finden.

Als nicht-ionische Tenside kommen in erster Linie Polyglykoletherderivate von aliphatischen oder cycloaliphatischen Alkoholen, gesättigten oder ungesättigten Fettsäuren und Alkyphenolen in Frage, die 3 bis 30 Glykolethergruppen und 8 bis 20 Kohlenstoffatome im (aliphatischen) Kohlenwasserstoffrest und 6 bis 18 Kohlenstoffatome im Alkylrest der Alkylphenole enthalten können.

Weitere geeignete nicht-ionische Tenside sind die wasserlöslichen, 20 bis 250 Ethylenglykolethergruppen und 10 bis 100 Propylenglykolethergruppen enthaltenden Polyethylenoxidaddukte an Polypropylenglykol, Ethylendiaminopolypropylenglykol und Alkylpolypropylenglykol mit 1 bis 10 Kohlenstoffatomen in der Alkylkette. Die genannten Verbindungen enthalten üblicherweise pro Propylenglykol-Einheit 1 bis 5 Ethylenglykoleinheiten.

Als Beispiele nicht-ionischer Tenside seien Nonylphenolpolyethoxyethanole, Ricinusölpolyglykolether, Polypropylen-Polyethylenoxydaddukte, Tributylphenoxypolyethoxyethanol, Polyethylenglykol und Octylphenoxypolyethoxyethanol erwähnt.

Ferner kommen auch Fettsäureester von Polyoxyethylensorbitan wie das Polyoxyethylensorbitan-trioleat in Betracht.

Bei den kationischen Tensiden handelt es sich vor allem um quartäre Ammoniumsalze, welche als N-Substituenten mindestens einen Alkylrest mit 8 bis 22 C-Atomen enthalten und als weitere Substituenten niedrige, gegebenenfalls halogenierte Alkyl-, Benzyl- oder niedrige Hydroxyalkylreste aufweisen. Die Salze liegen vorzugsweise als Halogenide, Methylsulfate oder Ethylsulfate vor, z.B. das Stearyltrimethylammoniumchlorid oder das Benzyldi(2-chlorethyl)ethylammoniumbromid.

Die in der Formulierungstechnik gebräuchlichen Tenside sind u.a. in folgenden Publikationen beschrieben:
"McCutcheon's Detergents and Emulsifiers Annual" MC Publishing Corp., Ridgewood New Jersey, 1981;
Helmut Stache "Tensid-Taschenbuch" Carl Hanser-Verlag München/Wien 1981.

Als Bindemittel für wasserlösliche Granulate oder Tabletten kommen chemisch abgewandelte, in Wasser oder Alkohol lösliche, polymere Naturstoffe in Frage, wie Stärke-, Cellulose- oder Proteinderivate (z.B. Methylcellulose, Carboxymethylcellulose, Ethylhydroxyethylcellulose, Proteine wie Zein, Gelatine und dergleichen) sowie synthetische Polymere wie z.B. Polyvinylalkohol, Polyvinylpyrrolidon etc.. Ferner sind in Tabletten Füllstoffe, (z.B. Stärke, mikrokristalline Cellulose, Zucker, Milchzucker etc.), Gleitmittel und Sprengmittel enthalten.

Die Applikation der erfindungsgemässen Mittel auf die zu bekämpfenden Parasiten kann so durchgeführt werden, dass die Mittel in Form von Lösungen, Emulsionen, Suspensionen (Drenchs), Pulvern oder Tabletten in den Käfig gegeben werden, wo sie durch die Bewegung der Fische und das durchströmende Wasser rasch aufgelöst und verteilt werden. Konzentrierte Lösungen können auch vor der Zugabe in die Käfige mit grösseren Valumina von Meereswasser verdünnt werden. Konzentrationsprobleme in den Käfigen treten i.a. nicht auf, da die Fische bei jedem Oeffnen der Käfige in Futtererwartung wild durcheinander wirbeln und für rasche Verdünnung sorgen.

Die erfindungsgemässen antiparasitären Mittel enthalten in der Regel 0,1 bis 99 Gew.%, insbesondere 0,1 bis 95 Gew.-%, Wirkstoff der Formel I, und 99,9 bis 1 Gew.-%, insbesondere 99,9 bis 5 Gew.-%, eines festen oder flüssigen Zusatzstoffes, darunter 0 bis 25 Gew.-%, insbesondere 0,1 bis 25 Gew.-%, eines Tensides.

Während als Handelsware eher konzentrierte Mittel bevorzugt werden, verwendet der Endverbraucher in der Regel verdünnte Mittel, die er durch Verdünnen der Handelsware mit Wasser erhält.

Solche Mittel können noch weitere Zusätze wie Stabilisatoren, Entschäumer, Viskositätsregulatoren, Bindemittel, Haftmittel sowie andere Wirkstoffe zur Erzielung spezieller Effekte enthalten.

### Formulierungsbeispiele (% = Gewichtsprozent)

### F.1. Emulsions-Konzentrate

| | a) | b) | c) |
|---|---|---|---|
| Wirkstoff | 25 % | 40 % | 50 % |
| Ca-Dodecylbenzolsulfonat | 5 % | 8 % | 6 % |
| Ricinusöl-polyethylenglykolether (36 Mol Ethylenoxid) | 5 % | - | - |
| Tributylphenol-polyethylenglykolether (30 | - | 12 % | 4 % |
| Mol Ethylenoxid) | | | |
| Cyclohexanon | - | 15 % | 20 % |
| Xylolgemisch | 65 % | 25 % | 20 % |

Aus solchen Konzentraten können durch Verdünnen mit Wasser Emulsionen jeder gewünschten Konzentration hergestellt werden.

### F.2. Lösungen

| | a) | b) | c) | d) |
|---|---|---|---|---|
| Wirkstoff | 80 % | 10 % | 5 % | 95 % |
| Ethylenglykol-monomethyl-ether | 20 % | - | - | - |
| Polyethylenglykol MG 400 | - | 70 % | - | - |
| N-Methyl-2-pyrrolidon | - | 20 % | - | - |
| Epoxidiertes Kokosnussöl | - | - | 1 % | 5 % |
| Benzin (Siedegrenze 160-190°C) | - | - | 94 % | - |
| (MG = Molekulargewicht) | | | | |

Die Lösungen sind zur Anwendung in Form kleinster Tropfen geeignet.

### F.3. Granulate

| | a) | b) |
|---|---|---|
| Wirkstoff | 5 % | 10 % |
| Kaolin | 94 % | - |
| Hochdisperse Kieselsäure | 1 % | - |
| Attapulgit | - | 90 % |

Der Wirkstoff wird in Methylenchlorid gelöst, auf den Träger aufgesprüht und das Lösungsmittel anschliessend im Vakuum eingedampft. Solche Granulate können dem Viehfutter beigemischt werden.

### F.4. Stäubemittel

| | a) | b) |
|---|---|---|
| Wirkstoff | 2 % | 5 % |
| Hochdisperse Kieselsäure | 1 % | 5 % |
| Talkum | 97 % | - |
| Kaolin | - | 90 % |

Durch inniges Vermischen auf Trägerstoffe mit dem Wirkstoff erhält man gebrauchsfertige Stäubemittel.

### F.5. In Wasser dispergierbare Pulvermischung

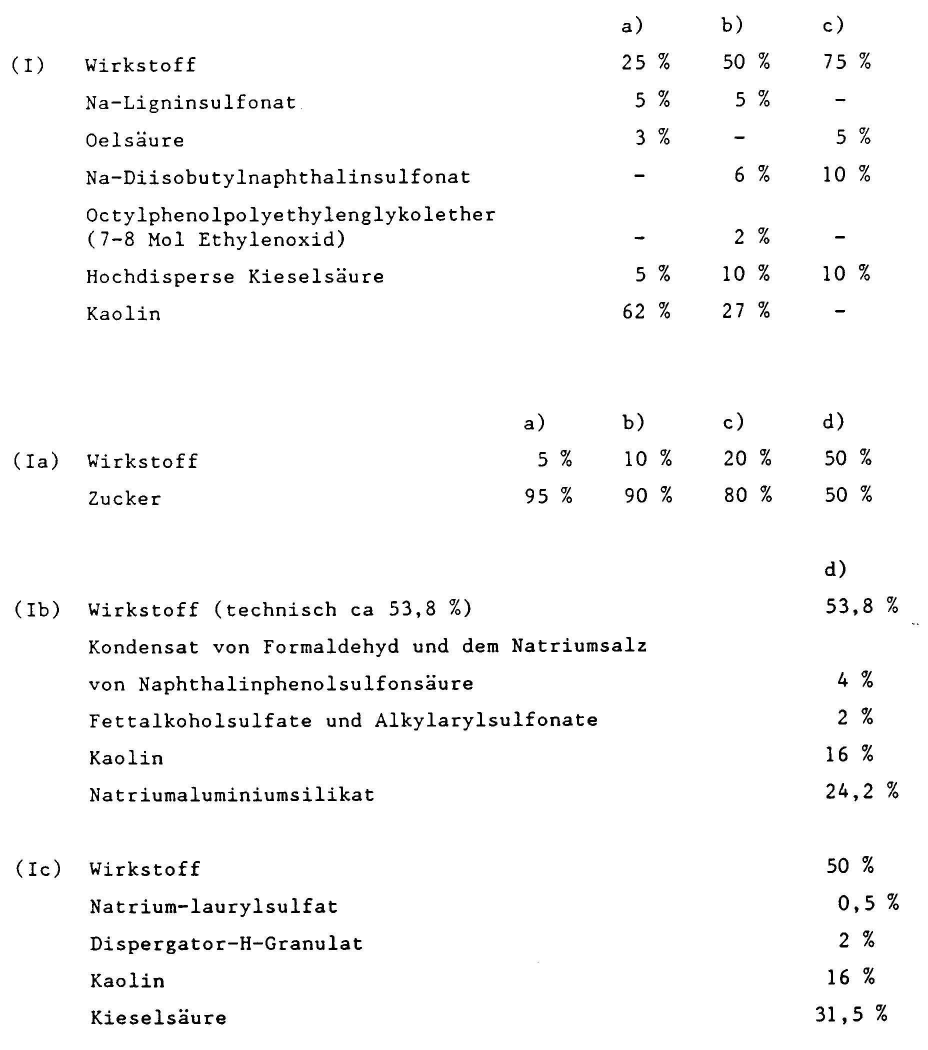

Der Wirkstoff wird mit den Zusatzstoffen gut vermischt und in einer geeigneten Mühle gut vermahlen. Man erhält Spritzpulver, die sich mit Wasser zu Suspensionen jeder gewünschten Konzentration verdünnen lassen.

### F.6. Emulsions-Konzentrat

| | a) | b) | c) |
|---|---|---|---|
| Wirkstoff | 10 % | 8 % | 60 % |
| Octylphenolpolyethylenglykolether (4-5 Mol Ethylenoxid) | 3 % | 3 % | 2 % |
| Ricinusölpolyglykolether (35 Mol Ethylenoxid) | 4 % | 5 % | 4 % |
| Cyclohexanon | 30 % | 40 % | 15 % |
| Xylolgemisch | 50 % | 40 % | 15 % |

Aus diesem Konzentrat können durch Verdünnen mit Wasser Emulsionen jeder gewünschten Konzentration hergestellt werden.

### F.7. Stäubemittel

| | a) | b) |
|---|---|---|
| Wirkstoff | 5 % | 8 % |
| Talkum | 95 % | - |
| Kaolin | - | 92 % |

Man erhält anwendungsfertige Stäubemittel, indem der Wirkstoff mit dem Träger vermischt auf einer geeigneten Mühle vermahlen wird.

### F.8. Granulat

| | |
|---|---|
| Wirkstoff | 10 % |
| Na-Ligninsulfonat | 2 % |
| Carboxymethylcellulose | 1 % |
| Kaolin | 87 % |

Der Wirkstoff wird mit den Zusatzstoffen vermischt, vermahlen und mit Wasser angefeuchtet. Dieses Gemisch wird extrudiert und anschliessend im Luftstrom getrocknet.

### F.9. Granulat

| | |
|---|---|
| Wirkstoff | 3 % |
| Polyethylenglykol (MG 200) | 3 % |
| Kaolin | 94 % |
| (MG = Molekulargewicht) | |

Der fein gemahlene Wirkstoff wird in einem Mischer auf das mit Polyethylenglykol angefeuchtete Kaolin gleichmässig aufgetragen. Auf diese Weise erhält man staubfreie Umhüllungs-Granulate.

### F.10. Suspensions-Konzentrat

| | |
|---|---|
| Wirkstoff | 40 % |
| Ethylenglykol | 10 % |
| Nonylphenolpolyethylenglykolether (15 Mol Ethylenoxid) | 6 % |
| Na-Ligninsulfonat | 10 % |
| Carboxymethylcellulose | 1 % |
| 37%ige wässrige Formaldehyd-Lösung | 0,2 % |
| Silikonöl in Form einer 75%igen wässrigen Emulsion | 0,8 % |
| Wasser | 32 % |

Der fein gemahlene Wirkstoff wird mit den Zusatzstoffen innig vermischt. Man erhält so ein Suspension-Konzentrat, aus welchem durch Verdünnen mit Wasser Suspensionen jeder gewünschten Konzentration hergestellt werden können.

Die Verwendung von Azamethiphos zur Herstellung eines Mittels zur Bekämpfung von auf Fischen parasitierenden Crustaceaen, insbesondere von Fischläusen, ist ein Bestandteil der vorliegenden Erfindung.

### Biologische Beispiele

### 1. Wirkung gegen Lachslaus (In vitro Test)

### a)Einsammeln und Kultivieren der Lachsläuse

Adulte und pre-adulte Stadien der Lachslaus werden von natürlich infizierten Atlantik-Lachsen, die in Fischfarmen gehalten wurden, sorgfältig mit breiten Pinzetten entfernt, nach Stadium und Geschlecht getrennt und in Meereswasser-Behältern bei 10°C und kontinuierlichen Belüftung gehalten. Das zur Kultivierung verwendete Meereswasser stammt aus der Lachsfarm, aus der die infizierten Lachse entnommen werden. Die eigentlichen Tests werden innerhalb von 48 Stunden nach Einsammeln der Läuse durchgeführt.

### b) In vivo Test zur Ermittlung der Kontaktwirkung des Wirkstoffs

Plastikgefässe werden mit 50 ml Meereswasser (10°C) gefüllt. In jedes dieser Gefässe werden 5 weibliche und 5 männliche Adulte sowie 5 pre-adulte Lachsläuse gegeben. Das Meereswasser wird über ein Sieb rasch abdekantiert und durch 50 ml der Prüflösung (Meereswaser von 10°C enthaltend die Prüfsubstanz) ersetzt. Die Läuse werden 1 Stunde dieser Lösung ausgesetzt, da dies etwa den Verhältnissen in den Fischkäfigen entspricht. Dann wird der Behälter mit frischem Meereswasser gespült und die Läuse in frischem Meereswasser gehalten. Zur Auswertung wird die Zahl der abgetöteten Läuse in Abhängigkeit von Geschlecht, Stadium und Wirkstoffkonzentration ermittelt. Die Auszählung wird stündlich wiederholt bis keine überlebenden Läuse mehr vorhanden sind. Alle Versuche erfolgen in dreifachere Ausführung.

### b1) Wirkungsgrenzwerte

Die Läuse werden gemäss (b) Aktivsubstanz-Konzentrationen von 0,001 bis 1,0 ppm für den Zeitraum von 1 Stunde ausgesetzt und die Mortalitätsrate anhand der abgetöteten Parasiten bestimmt. Nach 1 Stunde wird eine 100 % Mortalität bei 0,1 ppm, nach 2 Stunden bei 0,01 ppm festgestellt. Unterhalb von 0,01 ppm überleben die Parasiten länger als 24 Stunden.

### b2) Wirkung der Aktivsubstanz in Abhängigkeit der Temperatur und der Salzkonzentration

Die Temperaturabhängigkeit wird bei Werten zwischen 4°C und 16°C bei einer Aktivsubstanz-Konzentration von 0,01 ppm und einer Einwirkungszeit von 1 Stunde bestimmt. Man erhält folgende Werte:

| | | | | | |
|---|---|---|---|---|---|
| Temperatur [°C] | 4 | 8 | 10 | 12 | 16 |
| Parasiten-Mortalität [%] | 68 | 60 | 57 | 65 | 78 |

Man beobachtet unterhalb und oberhalb von 10°C einen leichten Anstieg der Mortalität. Demgegenüber zeigt bei gleicher Aktivsubstanz-Konzentration und Einwirkungsdauer die Veränderung des Salzgehalts von 23 % auf 30 % keine signifikanten Einflüsse auf die Mortalität.

### 2. Wirkung gegen Lachslaus (In vivo-Test)

5 natürlich infizierte Atlantiklachse in einer Fischfarm werden dem Käfig entnommen und in gut belüftete Meerwasseraquarien überführt. Sie bleiben dort 48 Stunden zur Eingewöhnung und bekommen 24 Stunden vor der Wirkstoffzugabe kein Futter. Eine Gruppe von 5 Lachsen wird für den Zeitraum von 1 Stunde einer Aktivsubstanz-Konzentration von 1,0 ppm, eine zweite Gruppe von 5 Lachsen einer Aktivsubstanz-Konzentration von 0,1 ppm ausgesetzt. Man hält die Fische anschliessend noch 24 Stunden in frischem Meereswasser (ohne Wirkstoff) und zählt dann die abgetöteten und noch lebenden Parasiten zur Bestimmung der Mortalität. Einbezogen in die Auswertung wird auch eine unbehandelte Gruppe von Fischen. Der Versuch wird dreimal wiederholt.

Die Auswertung zeigt, dass alle adulten und pre-adulten Stadien bei beiden Konzentrationen von 0,1 und 1,0 ppm abgetötet werden. Somit zeigt die Aktivsubstanz in den in vitro- und in vivo-Tests übereinstimmmende Resultate.

## Patentansprüche

1. Verwendung von S-6-Chlor-2,3-dihydro-2-oxo-1,3-oxazolo-[4,5-b]-pyridin-3-ylmethyl O,O-dimethylphosphorthioat (Azamethiphos) zur Herstellung eines Präparates zur Bekämpfung von Fischläusen, die auf Fischen der Familie Salmonidae parasitieren.

2. Verwendung von Azamethiphos gemäss Anspruch 1 zur Herstellung eines Präparates zur Bekämpfung von Fischläusen auf Fischen der Arten Salmon salar, Salmon trutta, Salmon gairdneri, Oncorhynchus gorbuscha, Oncorhynchus keta, Oncorhynchus nekra, Oncorhynchus kisutch, Oncorhynchus tshawytscha, Oncorhynchus mamson, Salvelinus spezies und Salmo clarkii.

3. Verwendung von Azamethiphos gemäss Anspruch 1 zur Herstellung eines Präparates zur Bekämpfung von Fischläusen der Gattung Lepeophtheirus oder der Gattung Caligus.

4. Verwendung von Azamethiphos gemäss Anspruch 3 zur Herstellung eines Präparates zur Bekämpfung von Fischläusen der Art Lepeophtheirus salmonis oder der Art Caligus elongatus.

5. Verwendung von Azamethiphos gemäss Anspruch 1 zur Herstellung eines Präparates zur Bekämpfung von Fischläusen im preadulten oder adulten Stadium.

6. Verwendung von Azamethiphos gemäss Anspruch 1 zur Herstellung eines Präparates zur Bekämpfung von Fischläusen, das im Wasser, welches die Fischlaus umgibt, aufgelöst wird oder welches dem Wasser, welches die Fischläuse umgibt, in verdünnter Form zugesetzt wird.

7. Verwendung von Azamethiphos gemäss Anspruch 1 zur Herstellung eines Präparates zur Bekämpfung von Fischläusen bei einer Konzentration der Aktivsubstanz im Wasser von zwischen 0,005 und 2 ppm.

8. Verwendung von Azamethiphos gemäss Anspruch 7 zur Herstellung eines Präparates zur Bekämpfung von Fischläusen bei einer Konzentration der Aktivsubstanz im Wasser von zwischen 0,01 und 1 ppm.

## Claims

1. The use of S-6-chloro-2,3-dihydro-2-oxo-1,3-oxazolo[4,5-b]pyridin-3-ylmethyl O,O-dimethyl phosphorothioate (azamethiphos) for producing a preparation to control fish lice which parasitise fish of the family Salmonidae.

2. The use of azamethiphos according to claim 1 for producing a preparation to control fish lice on fish of the species Salmon salar, Salmon trutta, Salmon gairdneri, Oncorhynchus gorbuscha, Oncorhynchus keta, Oncorhynchus nekra, Oncorhynchus kisutch, Oncorhynchus tshawytscha and Oncorhynchus mamson, Salvelinus species and Salmo clarkii.

3. The use of azamethiphos according to claim 1, for producing a preparation to control fish lice of the genus Lepeophtheirus or of the genus Caligus.

4. The use of azamethiphos according to claim 3 for producing a preparation to control fish lice of the species Lepeophtheirus salmonis or Caligus elongatus.

5. The use of azamethiphos according to claim 1 for producing a preparation to control fish lice in a pre-adult or adult stage.

6. The use of azamethiphos according to claim 1 for producing a preparation to control fish lice, which preparation is dissolved in the ambient water of the fish louse or is added in dilute form to the ambient water of the fish lice.

7. The use of azamethiphos according to claim 1 for producing a preparation to control fish lice at an active substance concentration in water of between 0.005 and 2 ppm.

8. The use of azamethiphos according to claim 7 for producing a preparation to control fish lice at an active substance concentration in water of between 0.01 and 1 ppm.

## Revendications

1. Application de S-6-chloro-2,3-dihydro-2-oxo-1,3-oxazolo-[4,5-b]-pyridin-3-ylméthyl-O,O-diméthylphosphorothioate (Azaméthiphos) pour préparer une préparation visant à combattre les poux de mer qui parasitent les poissons de la famille des salmonidés.

2. Application d'Azaméthiphos selon la revendication 1 pour préparer une préparation visant à combattre les poux de mer sur les poissons appartenant aux espèces Salmon salar, Salmon trutta, Salmon gairdneri, Oncorhychus gorbuscha, Oncorhychus keta, Oncorhychus nekra, Oncorhychus kisutsch, Oncorhychus tshawytscha, oncorhychus mason, Salvelinus sp. et Salmo clarkii.

3. Application d'Azaméthiphos selon la revendication 1 pour préparer une préparation visant à combattre les poux de mer du genre Lepeophtheirus ou du genre Caligus.

4. Application d'Azaméthiphos selon la revendication 3 pour préparer une préparation visant à combattre les poux de mer de l'espèce Lepeophtheirus salmonis ou de l'espèce Caligus elongatus.

5. Application d'Azaméthiphos selon la revendication 1 pour préparer une préparation visant à combattre les poux de mer au stade préadulte ou adulte.

6. Application d'Azaméthiphos selon la revendication 1 pour préparer une préparation visant à combattre les poux de mer, que l'on dissout dans l'eau qui entoure les poux de mer ou que l'on ajoute sous forme diluée à l'eau qui entoure les poux de mer.

7. Application d'Azaméthiphos selon la revendication 1 pour préparer une préparation visant à combattre les poux de mer à une concentration de la substance active dans l'eau comprise entre 0,005 et 2 ppm.

8. Application d'Azaméthiphos selon la revendication 7 pour préparer une préparation visant à combattre les poux de mer à une concentration de la subsance active dans l'eau comprise entre 0,01 et 1 ppm.
